# EUROPÄISCHE PATENTANMELDUNG

(11) **EP 4 390 437 A1**
(43) Veröffentlichungstag der Anmeldung: **26.06.2024**
(21) Anmeldenummer: 22215588.9
(22) Anmeldetag: 21.12.2022
(51) Int. Cl.: G01S 5/02, G06N 3/09

(54) **VERFAHREN UND ORTUNGSGERÄT ZUM ORTEN VON FUNKETIKETTEN SOWIE VERFAHREN UND ANORDNUNG ZUM KONFIGURIEREN DES ORTUNGSGERÄTS**

(71) Anmelder: Siemens Aktiengesellschaft, 80333 München (DE)
(72) Erfinder: Hein, Daniel, 81549 München (DE); Häuser, Markus, 90475 Nürnberg (DE); Limmer, Steffen, 80636 München (DE); Strixner, Ferdinand, 81739 München (DE); Weber, Marc Christian, 80339 München (DE)
(74) Vertreter: Siemens Patent Attorneys

(57) **Zusammenfassung**

Zum Konfigurieren eines Ortungsgeräts (OG) zum Orten von Funketiketten (RF), werden ein oder mehrere erste Funketiketten (RF) viele Male unter variierten Beförderungsbedingungen durch einen vorgegebenen Bereich (B) befördert. Dabei werden jeweils eine aktuelle Position (P) eines jeweiligen ersten Funketiketts (RF) mittels eines Lokalisierungssensors (C) erfasst, ein Funksignal des jeweiligen ersten Funketiketts (RF) empfangen sowie ein jeweiliger Signalstärkeverlauf (TS1, TS2) des empfangenen Funksignals erfasst. Erfindungsgemäß wird ein Maschinenlernmodul (CNN) anhand der erfassten aktuellen Positionen (P) und Signalstärkeverläufe (TS1, TS2) darauf trainiert, anhand mindestens eines Signalstärkeverlaufs (TS1, TS2) eine korrespondierende aktuelle Position (P) zu reproduzieren. Das Ortungsgerät (OG) wird dann dazu eingerichtet, Signalstärkeverläufe (TS1, TS2) empfangener Funksignale von zweiten Funketiketten (RF) in das trainierte Maschinenlernmodul (CNN) einzuspeisen und anhand von dessen resultierenden Ausgabesignalen eine jeweilige aktuelle Position (PP) eines jeweiligen zweiten Funketiketts (RF) zu ermitteln.

## Beschreibung

Zum Überwachen oder Erfassen von Gütern, Waren oder anderen Gegenständen werden sehr oft Funketiketten, z.B. sogenannte RFID-Transponder oder RFID-Tags (RFID: radio-frequency identification) eingesetzt. Derartige Funketiketten können mittels hochfrequenter Radiowellen von entsprechenden Lesegeräten ausgelesen werden. In vielen Fällen wird dabei das Funketikett durch vom Lesegerät erzeugte Radiowellen mit Energie versorgt und benötigt somit keine eigene Energieversorgung.

Funketiketten erlauben eine einfache Identifikation von entsprechend etikettierten Objekten sowie eine Übertragung von Information zwischen Funketikett und Lesegerät.

Mittels eines sogenannten RFID-Gate können Objekte, die mit einem RFID-Tag versehen sind, in einem Umgebungsbereich von typischerweise wenigen Metern ausgelesen und/oder identifiziert werden. Ein typisches RFID-Gate kann dabei z.B. vier Antennen umfassen, die paarweise an zwei getrennten Seitenpfosten angeordnet sind. Davon abweichende Konfigurationen oder eine größere Zahl von Antennen sind jedoch ebenfalls verbreitet.

Mit einem RFID-Tag versehene Objekte können durch ein RFID-Gate in der Regel mit hoher Zuverlässigkeit erkannt und ausgelesen werden, wenn sie diesem RFID-Gate hinreichend nahekommen. Erheblich schwieriger ist es indessen, ein RFID-Tag genauer zu lokalisieren, weil in vielen Fällen nur die empfangenen Signalstärken als Messgrundlage vorliegen, die oft nur eine sehr grobe Abschätzung über eine jeweilige Entfernung des RFID-Tags von den empfangenden Antennen erlauben. Die empfangenen Signalstärken werden häufig auch als RSSI-Werte (RSSI: Received Signal Strength Indicator) bezeichnet. Zudem sind die erfassten Signalstärken in vielen Fällen einem starken Rauschen ausgesetzt und werden von Gegenständen oder Gebäudeelementen in der Umgebung des RFID-Gates stark beeinflusst. Nicht zuletzt hängen die erfassten Signalstärken auch von einer Ausrichtung der Antennen oder der RFID-Tags sowie von dem jeweils etikettierten Objekt ab.

Es ist Aufgabe der vorliegenden Erfindung, ein Verfahren und ein Ortungsgerät zum Orten von Funketiketten sowie ein Verfahren und eine Anordnung zum Konfigurieren des Ortungsgeräts anzugeben, die eine genauere und/oder robustere Lokalisierung von Funketiketten erlauben.

Gelöst wird diese Aufgabe durch Verfahren mit den Merkmalen der Patentansprüche 1 und 12, durch eine Anordnung mit den Merkmalen des Patentanspruchs 14 sowie durch ein Ortungsgerät mit den Merkmalen des Patentanspruchs 15.

Zum Konfigurieren eines Ortungsgeräts zum Orten von Funketiketten, werden ein oder mehrere erste Funketiketten viele Male unter variierten Beförderungsbedingungen durch einen vorgegebenen Bereich befördert. Dabei werden jeweils eine aktuelle Position eines jeweiligen ersten Funketiketts mittels eines Lokalisierungssensors erfasst, ein Funksignal des jeweiligen ersten Funketiketts empfangen sowie ein jeweiliger Signalstärkeverlauf des empfangenen Funksignals erfasst. Erfindungsgemäß wird ein Maschinenlernmodul anhand der erfassten aktuellen Positionen und Signalstärkeverläufe darauf trainiert, anhand mindestens eines Signalstärkeverlaufs eine korrespondierende aktuelle Position zu reproduzieren. Das Ortungsgerät wird dann dazu eingerichtet, Signalstärkeverläufe empfangener Funksignale von zweiten Funketiketten in das trainierte Maschinenlernmodul einzuspeisen und anhand von dessen resultierenden Ausgabesignalen eine jeweilige aktuelle Position eines jeweiligen zweiten Funketiketts zu ermitteln.

Zum Ausführen des vorstehenden Verfahrens ist eine Anordnung zum Konfigurieren eines Ortungsgeräts zum Orten von Funketiketten vorgesehen.

Durch Ausführung des vorstehenden Verfahrens wird ein Ortungsgerät zum Orten von Funketiketten eingerichtet.

Zum Orten von Funketiketten ist vorgesehen, ein Ortungsgerät gemäß dem vorstehenden Verfahren einzurichten und eine aktuelle Position eines zweiten Funketiketts mittels des konfigurierten Ortungsgeräts zu ermitteln.

Die erfindungsgemäßen Verfahren, die erfindungsgemäße Anordnung sowie das erfindungsgemäße Ortungsgerät können beispielsweise mittels eines oder mehrerer Prozessoren, Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus können die erfindungsgemäßen Verfahren zumindest teilweise in einer Cloud und/oder in einer Edge-Computing-Umgebung ausgeführt werden.

Ein wesentlicher Vorteil der Erfindung ist insbesondere darin zu sehen, dass Funketiketten bereits anhand der von ihnen bestimmungsgemäß abgegebenen Funksignale genauer lokalisiert werden können. Insofern das Maschinenlernmodul in vielen Fällen lernen kann, für die Position von Funketiketten relevante Funksignalmuster von weniger relevanten Funksignalmustern zu unterscheiden, erweist sich eine erfindungsgemäße Ortung häufig als verhältnismäßig robust. Darüber hinaus erfordert die Erfindung nur einen verhältnismäßig geringen Kalibrierungsaufwand, da nur einmalig Kalibrierungsdaten für das Training des Maschinenlernmoduls zu erzeugen sind, und das trainierte Maschinenlernmodul dann auf einer Vielzahl von Ortungsgeräten installiert werden kann.

Vorteilhafte Ausführungsformen und Weiterbildungen der Erfindung sind in den abhängigen Ansprüchen angegeben.

Gemäß einer vorteilhaften Ausführungsform der Erfindung kann ein an einem Objekt angebrachtes Funketikett mit dem Objekt durch den Bereich bewegt werden. Auf diese Weise kann das Training unter besonders realitätsnahen Bedingungen durchgeführt werden. Insbesondere kann eine mögliche Beeinflussung eines Signalstärkeverlaufs durch ein jeweils etikettiertes Objekt beim Training berücksichtigt werden.

Weiterhin kann zum Variieren der Beförderungsbedingungen
- eine Bewegungstrajektorie, eine Bewegungsrichtung, eine Bewegungsgeschwindigkeit, ein Bewegungsmuster, eine Orientierung, ein Typ und/oder eine Anzahl des mindestens einen ersten Funketiketts,
- eine Bewegungstrajektorie, eine Bewegungsrichtung, eine Bewegungsgeschwindigkeit, ein Bewegungsmuster, eine Orientierung, ein Typ und/oder eine Anzahl von mindestens einem mit einem ersten Funketikett versehenen Objekt,
- eine Position oder Orientierung eines funksignalbeeinflussenden Gegenstandes,
- eine Ausrichtung einer Antenne des Ortungsgeräts,
- eine Sendeleistung, Empfindlichkeit oder Einstellung des Ortungsgeräts, und/oder
- eine Hardwarekonfiguration des Ortungsgeräts variiert werden. Die Hardwarekonfiguration kann beispielweise ein verwendetes Antennenmodell, ein verwendetes Lesegerätmodell oder eine Kabellänge zwischen einer Antenne und einem Lesegerät betreffen. Vorteilhafterweise können die Beförderungsbedingungen so variiert werden, dass sie im Betrieb des konfigurierten Ortungsgeräts mögliche und/oder zulässige Beförderungsszenarien oder Nutzungsarten möglichst repräsentativ oder vollständig abdecken.

Nach einer vorteilhaften Weiterbildung der Erfindung kann bei der jeweiligen Beförderung eines oder mehrerer erster Funketiketten durch den Bereich jeweils
- eine Bewegungstrajektorie, eine Bewegungsrichtung, eine Bewegungsgeschwindigkeit, ein Bewegungsmuster, eine Orientierung, ein Typ und/oder eine Anzahl des mindestens einen ersten Funketiketts oder
- eine Bewegungstrajektorie, eine Bewegungsrichtung, eine Bewegungsgeschwindigkeit, ein Bewegungsmuster, eine Orientierung, ein Typ und/oder eine Anzahl von mindesten einem mit einem ersten Funketikett versehenen Objekt
   als Messergebnis erfasst werden. Das Maschinenlernmodul kann entsprechend darauf trainiert werden, anhand mindestens eines Signalstärkeverlaufs ein korrespondierendes Messergebnis zu reproduzieren. Auf diese Weise kann das Ortungsgerät dazu eingerichtet werden, neben der aktuellen Position auch andere Bewegungseigenschaften oder Beförderungsbedingungen von zweiten Funketiketten anhand von empfangenen Funksignalen zu ermitteln.

Vorteilhafterweise kann ein jeweiliges Funksignal durch mehrere Antennen empfangen werden. Für eine jeweilige Antenne kann ein antennenspezifischer Signalstärkeverlauf des empfangenen Funksignals erfasst und einer die jeweilige Antenne identifizierenden Antennenkennung zugeordnet werden. Dem Maschinenlernmodul kann dann ein jeweiliger Signalstärkeverlauf zusammen mit einer jeweils zugeordneten Antennenkennung zugeführt werden. Durch die Verwendung mehrerer Antennen kann eine Genauigkeit der Ortung in der Regel signifikant gesteigert werden.

Weiterhin kann dem Maschinenlernmodul ein jeweiliger Signalstärkeverlauf zusammen mit einer jeweils empfangenen Funketikettkennung zugeführt werden. Auf diese Weise können spezifische Eigenschaften von Funketiketten beim Training berücksichtigt werden.

Nach einer weiteren vorteilhaften Weiterbildung der Erfindung kann ein Reproduktionsfehler des Maschinenlernmoduls, insbesondere ein Fehler bei der Reproduktion einer aktuellen Position erfasst werden. Damit können in erfassten Signalstärkeverläufen spezifische Signalanteile gesucht werden, die bei Einspeisung in das Maschinenlernmodul den Reproduktionsfehler zumindest im Mittel verringern, insbesondere minimieren. Derart gefundene Signalanteile können dann aus erfassten Signalstärkeverläufen gezielt extrahiert werden und zum Training und/oder zum Verwenden des Maschinenlernmoduls als vorverarbeiteter Signalstärkeverlauf in das Maschinenlernmodul eingespeist werden. Auf diese Weise können spezifisch relevante Signalanteile identifiziert werden, die möglichst unabhängig von Umgebungseigenschaften, Antennencharakteristiken oder anderen nicht durch die Bewegung eines Funketiketts bedingten Einflüssen einen Rückschluss auf eine aktuelle Position oder Bewegung des Funketiketts erlauben.

Gemäß einer weiteren vorteilhaften Weiterbildung der Erfindung kann das trainierte Maschinenlernmodul an einem Einsatzort des Ortungsgeräts anhand von am Einsatzort erfassten Positionsdaten nachtrainiert werden. Als Positionsdaten können dabei insbesondere Lokalisierungsdaten aus einem Objektüberwachungssystem eines Betreibers oder manuell eingegebene Lokalisierungsdaten, Bestätigungsdaten und/oder Korrekturdaten verwendet werden. Alternativ oder zusätzlich kann auch ein sogenanntes Auto-Labeling-Verfahren, z.B. via Clusteranalyse ausgeführt werden.

Nach einer weiteren vorteilhaften Ausführungsform der Erfindung kann ein jeweiliger Signalstärkeverlauf von empfangenen Funksignalen auf ein vorgegebenes Zeitraster interpoliert werden. Der jeweils interpolierte Signalstärkeverlauf kann dann in das Maschinenlernmodul eingespeist werden. Auf diese Weise kann eine Menge der vom Maschinenlernmodul zu verarbeitenden Daten an eine tatsächliche Veränderungsgeschwindigkeit der Signalstärken angepasst werden. Das Zeitraster kann dabei typischerweise aus Zeitpunkten im Abstand von wenigen Sekunden gebildet werden.

Weiterhin kann als Lokalisierungssensor ein optischer Sensor, eine Kamera, ein funkwellenbasierter Sensor, ein Annäherungssensor und/oder ein Laserscanner verwendet werden. Insbesondere kann der Lokalisierungssensor auf Basis eines Lidar-, Radar-, RTLS- (Real-Time Locating System), Bluetooth-, W-LAN- oder 5G-Sytems realisiert werden. Vorzugsweise können mehrere derartige Lokalisierungssensoren, insbesondere mehrere Kameras eingesetzt werden.

Vorteilhafterweise kann das Maschinenlernmodul ein rekurrentes neuronales Netz, ein LSTM-Netz (LSTM: Long Short-Term Memory), ein faltendes neuronales Netz und/oder ein zeitlich faltendes neuronales Netz umfassen. Mittels derartiger neuronaler Netze können insbesondere Zeitreihendaten sehr effizient verarbeitet werden.

Nach einer weiteren vorteilhaften Weiterbildung der Erfindung können mehrere Signalstärkeverläufe in das Maschinenlernmodul eingespeist werden und jeweils eine Einzelprognose über eine Position eines zweiten Funketiketts ausgegeben werden. Die aktuelle Position des zweiten Funketiketts kann dann durch eine Kombination der Einzelprognosen ermittelt werden. Auf diese Weise kann eine Ortungsgenauigkeit in der Regel signifikant gesteigert werden. Insbesondere können einzelne Fehlprognosen, z.B. aufgrund eines kurzfristigen Signalausfalls oder besonders starker Störungen in der Regel effektiv kompensiert werden. Eine solche Aggregation von Einzelprognosen zu einem Gesamtergebnis kann auch durch ein spezifisches Training des Maschinenlernmoduls oder eines weiteren Maschinenlernmoduls optimiert werden. Zu diesem Zweck kann eine Art und Weise wie die Einzelprognosen zu kombinieren sind, durch Einstellparameter parametrisiert werden, wobei die Einstellparameter derart eingestellt werden, dass ein Prognosefehler des betreffenden Maschinenlernmoduls minimiert wird. Auf diese Weise kann insbesondere ein hierarchisches Maschinenlernmodell implementiert werden.

Ein Ausführungsbeispiel der Erfindung wird nachfolgend anhand der Zeichnung näher erläutert. Dabei veranschaulichen jeweils in schematischer Darstellung:
- Figur 1: eine Anordnung zum Konfigurieren eines Ortungsgeräts, und
- Figur 2: einen bestimmungsgemäßen Betrieb des konfigurierten Ortungsgeräts.

Insofern in den Figuren gleiche oder korrespondierende Bezugszeichen verwendet werden, bezeichnen diese Bezugszeichen gleiche oder korrespondierende Entitäten, die insbesondere wie im Zusammenhang mit der betreffenden Figur beschrieben, implementiert oder ausgestaltet sein können.

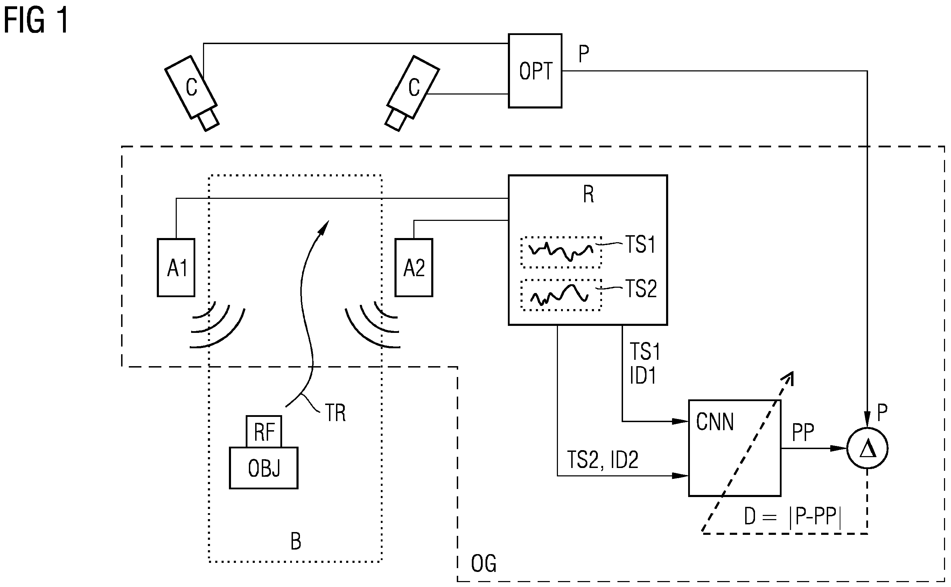

Figur 1 veranschaulicht in schematischer Darstellung eine Anordnung zum Konfigurieren eines Ortungsgeräts OG. Das Ortungsgerät OG kann hierbei insbesondere ein RFID-Gate oder ein Teil desselben sein. Das Ortungsgerät OG dient zum Überwachen eines vorgegebenen Bereichs B, durch den sich Objekte OBJ, z.B. Pakete, Verpackungen, Produkte, Produktkomponenten, Roboterfahrzeuge etc. bewegen. Der Bereich B kann beispielsweise ein Transportbereich oder ein Förderband einer Lagerhalle, eines Logistikzentrums, eines Warenlagers oder einer Produktionsanlage sein. Zur Identifikation und/oder Ortung der Objekte OBJ sind diese jeweils mit einem Funketikett RF, z.B. mit einem RFID-Tag versehen.

Das Ortungsgerät OG soll erfindungsgemäß derart konfiguriert werden, dass es durch den Bereich B bewegte Funketiketten RF anhand der von ihnen empfangenen Funksignale möglichst genau und/oder robust lokalisieren kann.

Zu diesem Zweck verfügt das Ortungsgerät OG über ein Lesegerät R für Funketiketten, mehrere an das Lesegerät R gekoppelte Antennen A1 und A2, über sowie über ein Maschinenlernmodul CNN. Das Maschinenlernmodul CNN umfasst im vorliegenden Ausführungsbeispiel ein faltendes, insbesondere ein zeitlich faltendes neuronales Netz. Ein solches faltendes neuronales Netz wird häufig auch als "convolutional neural network" bezeichnet. Alternativ oder zusätzlich kann das Maschinenlernmodul CNN ein rekurrentes neuronales Netz, ein LSTM-Netz oder ein anderes neuronales Netz umfassen. Das Maschinenlernmodul CNN soll darauf trainiert werden, aktuelle Positionen von Funketiketten RF zu prognostizieren.

Unter einem Training sei dabei allgemein eine Optimierung einer Abbildung von Eingabesignalen eines Maschinenlernmoduls, hier CNN, auf dessen Ausgabesignale verstanden. Diese Abbildung wird nach einem oder mehreren vorgegebenen Kriterien während einer Trainingsphase optimiert. Als Kriterium kann insbesondere bei Prognosemodellen ein Prognosefehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Trainieren lassen sich so insbesondere künstliche neuronale Netze, rekurrente neuronale Netze, faltende neuronale Netze, LSTM-Netze, Deep-Learning-Architekturen, Support-Vektor-Maschinen, bayessche neuronale Netze, Autoencoder, Gaußprozesse, datengetriebene Regressionsmodelle, K-nächste-Nachbarn-Klassifikatoren, physikalische Modelle oder Entscheidungsbäume.

Im vorliegenden Ausführungsbeispiel werden zum Training des Maschinenlernmoduls CNN mit ersten Funketiketten RF versehene Objekte OBJ viele Male unter variierten Beförderungsbedingungen, insbesondere auf unterschiedlichen Bewegungstrajektorien TR durch den Bereich B bewegt. Als erste Funketiketten werden hier und im Folgenden Funketiketten bezeichnet, die zum Training verwendet werden, während Funketiketten, die im bestimmungsgemäßen Betrieb zu orten sind, als zweite Funketiketten bezeichnet werden. Diese Unterscheidung dient lediglich zur Unterscheidung der Trainingsphase von einer Anwendungsphase und impliziert insbesondere keine strukturellen Unterschiede zwischen ersten und zweiten Funketiketten. Tatsächlich werden zum Training vorzugsweise (erste) Funketiketten verwendet, die gleichartig oder ähnlich zu den im bestimmungsgemäßen Betrieb zu ortenden (zweiten) Funketiketten sind. Entsprechend werden erste und zweite Funketiketten in den Figuren mit demselben Bezugszeichen gekennzeichnet.

Die Beförderungsbedingungen werden während der Trainingsphase so variiert, dass sie die in einen bestimmungsgemäßen Betrieb des konfigurierten Ortungsgeräts OG möglichen und/oder zulässigen Beförderungsszenarien, Nutzungsarten oder Einflussfaktoren möglichst vollständig und/oder repräsentativ abdecken. Insbesondere werden die Bewegungstrajektorien TR vorzugsweise über den gesamten Bereich B und/oder hinsichtlich einer Bewegungsrichtung, einer Bewegungsgeschwindigkeit oder eines Bewegungsmusters variiert. Weiterhin können eine Orientierung, ein Typ und/oder eine Anzahl der durch den Bereich B bewegten Objekte OBJ variiert werden. Darüber hinaus können eine Position oder Orientierung eines funksignalbeeinflussenden Gegenstandes im Bereich B oder in dessen Umgebung, eine Ausrichtung der Antennen A1, A2 und/oder eine Sendeleistung, Empfindlichkeit, Einstellung oder Hardwarekonfiguration des Ortungsgeräts OG variiert werden.

Zur Lokalisierung der Objekte OBJ und damit der ersten Funketiketten RF sind mehrere Kameras C auf den Bereich B gerichtet, die fortlaufend Bilder des Bereichs B aus unterschiedlichen Richtungen, beispielsweise in Draufsicht und Profilsicht aufnehmen. Die Kameras C sind an eine optische Auswerteeinrichtung OPT gekoppelt, zu der die aufgenommenen Bilder fortlaufend übermittelt werden. Die optische Auswerteeinrichtung OPT dient zum fortlaufenden Detektieren und Lokalisieren der Objekte OBJ. Alternativ oder zusätzlich zu den Kameras C können zur Lokalisierung der Objekte OBJ andere Lokalisierungssensoren vorgesehen sein, wie z.B. funkwellenbasierte Sensoren, Annäherungssensoren oder Laserscanner.

Im vorliegenden Ausführungsbeispiel wird durch die optische Auswerteeinrichtung OPT anhand der übermittelten Bilder fortlaufend eine jeweilige aktuelle Position P eines jeweiligen Objekts OBJ und damit eines jeweiligen Funketiketts RF im Zeitverlauf ermittelt. Als aktuelle Position P kann dabei insbesondere ein Positionsvektor, ein Bewegungsvektor und/oder eine Angabe, in welcher Zone des Bereichs B sich ein jeweiliges Objekt OBJ aktuell befindet, ermittelt werden. Zum letztgenannten Zweck kann der Bereich B beispielsweise in Zonen links und rechts von einer Mittelachse eines RFID-Gates und/oder in Zonen innerhalb und außerhalb einer Funkreichweite des RFID-Gates eingeteilt werden.

Sofern als aktuelle Position P eine diskrete Zonenangabe ermittelt wird, kann das Maschinenlernmodul CNN durch bekannte einschlägige Verfahren darauf trainiert werden, eine diskrete Klassifikation vorzunehmen. Sofern als aktuelle Position P eine quasikontinuierliche Positions- oder Bewegungsgröße ermittelt wird, kann das Maschinenlernmodul CNN durch ebenfalls einschlägige Verfahren darauf trainiert werden, eine quasikontinuierliche Prognose auszugeben. Ein Training des Maschinenlernmoduls CNN wird untern näher erläutert.

Vorzugsweise können durch die optische Auswerteeinrichtung OPT auch weitere Daten über die Bewegungen der Objekte OBJ in zeitaufgelöster Weise als Messergebnisse ermittelt werden, wie z.B. eine jeweilige Orientierung, eine jeweilige Bewegungsrichtung, eine jeweilige Bewegungsgeschwindigkeit, ein jeweiliges Bewegungsmuster, ein jeweiliger Typ und/oder eine Anzahl der Objekte OBJ. Die Messergebnisse können dann dazu verwendet werden, das Maschinenlernmodul CNN darauf zu trainieren, neben einer aktuellen Position auch die Messergebnisse zu reproduzieren.

Zur Auswertung der Bilder durch die optische Auswerteeinrichtung OPT stehen eine Vielzahl bekannter optischer Muster- oder Objekterkennungsverfahren zur Verfügung.

Weiterhin werden durch das Lesegerät R über die Antennen A1 und A2 Funkwellen in den Bereich B ausgestrahlt, die von einem jeweils darin befindlichen ersten Funketikett RF empfangen werden und dieses temporär mit Energie versorgen. Das jeweilige erste Funketikett RF strahlt infolgedessen während seiner Bewegung durch den Bereich B ein Funksignal ab, das von den Antennen A1 und A2 empfangen und an das Lesegerät R weitergeleitet wird. Das Funksignal enthält unter anderem eine dieses erste Funketikett RF identifizierende Funketikettkennung (nicht dargestellt).

Während das jeweilige erste Funketikett RF durch den Bereich B bewegt wird, erfasst das Lesegerät R einen jeweiligen zeitlichen Verlauf TS1 einer Signalstärke des von der Antenne A1 empfangenen Funksignals sowie einen jeweiligen zeitlichen Verlauf TS2 einer Signalstärke des von der Antenne A2 empfangenen Funksignals. Die antennenspezifischen Signalstärkeverläufe TS1 und TS1 werden jeweils in Form einer zeitlichen Abfolge, d.h. in Form einer Zeitreihe von sogenannten RSSI-Werten erfasst. Bedarfsweise werden die Signalstärkeverläufe TS1 und TS2 jeweils auf ein vorgegebenes Zeitraster mit einem Zeitpunkteabstand von z.B. 1s, 2s, 5s oder 10s interpoliert und in der interpolierten Form weiterverarbeitet.

Zur Vergrößerung einer Menge von zum Training verfügbaren Trainingsdaten kann optional vorgesehen sein, die ermittelten Positionen P sowie parallel dazu die Signalstärkeverläufe TS1 und TS2 an einer oder mehreren Symmetrieebenen oder Symmetrieachsen der Anordnung der Antennen, hier A1 und A2, zu spiegeln. Im vorliegenden Ausführungsbeispiel würde gemäß Figur 1 eine Spiegelung an der Symmetrieebene zwischen den Antennen A1 und A2 einer Spiegelung der Positionen P an dieser Symmetrieebene sowie einer Vertauschung der Signalstärkeverläufe TS1 und TS2 entsprechen. Die gespiegelten Trainingsdaten können dann zu den gemessenen, ungespiegelten Positionen P und Signalstärkeverläufen TS1 und TS2 hinzugefügt werden. Durch eine solche Erweiterung der Trainingsdaten kann in vielen Fällen eine Robustheit der Prognosen des Maschinenlernmoduls CNN signifikant gesteigert werden. Insbesondere kann gewissermaßen ein reines Auswendiglernen der konkreten Geometrie der Antennenanordnung reduziert werden.

Zum Training des Maschinenlernmoduls CNN werden sowohl der jeweilige Signalstärkeverlauf TS1 in Zuordnung zu einer die Antenne A1 identifizierenden Antennenkennung ID1 als auch der jeweilige Signalstärkeverlauf TS2 in Zuordnung zu einer die Antenne A2 identifizierenden Antennenkennung ID2 vom Lesegerät R in das Maschinenlernmodul CNN als zeitlich aufgelöste Eingabesignale eingespeist. Optional kann auch die jeweils empfangene Funketikettkennung dem Maschinenlernmodul CNN zugeführt werden.

Durch das Training wird angestrebt, dass das Maschinenlernmodul CNN anhand von eingespeisten, antennenspezifischen Signalstärkeverläufen, hier TS1 und TS2, eine tatsächlich erfasste aktuelle Position, hier P, möglichst gut reproduziert. D.h. dass ein Ausgabesignal PP des Maschinenlernmoduls CNN zumindest im Mittel möglichst gut mit der tatsächlich ermittelten aktuellen Position P übereinstimmt.

Zu diesem Zweck wird jeweils eine Abweichung D zwischen dem jeweiligen Ausgabesignal PP und der jeweils erfassten aktuellen Position P ermittelt. Die Abweichung D repräsentiert hierbei einen Reproduktions- oder Prädiktionsfehler des Maschinenlernmoduls CNN. Die Abweichung D kann insbesondere als Quadrat oder Betrag einer Differenz, insbesondere einer Vektordifferenz berechnet werden gemäß D = (P - PP)² oder D = |P - PP|. Die Abweichung D wird für jede der vielmaligen Beförderungen von ersten Funketiketten RF durch den Bereich B individuell ermittelt.

Die während der Trainingsphase ermittelten Abweichungen D werden, wie in Figur 1 durch einen strichlierten Pfeil angedeutet, zum Maschinenlernmodul CNN zurückgeführt. Anhand der zurückgeführten Abweichungen D wird das Maschinenlernmodul CNN darauf trainiert, diese Abweichungen D und damit den Reproduktionsfehler zumindest im Mittel zu minimieren. Zur Minimierung der Abweichungen D steht, wie oben bereits angedeutet, eine Vielzahl von bekannten Optimierungsverfahren wie z.B. Gradientenabstiegsverfahren, Partikelschwarmoptimierungen oder genetische Optimierungsverfahren zur Verfügung. Auf diese Weise wird das Maschinenlernmodul CNN durch ein überwachtes Lernverfahren darauf trainiert, anhand von eingespeisten, antennenspezifischen Signalstärkeverläufen eine aktuelle Position eines jeweiligen Objekts OBJ und damit des jeweiligen Funketiketts RF verhältnismäßig genau zu prognostizieren.

Optional können zur Verbesserung einer Prognosegüte in den jeweils erfassten Signalstärkeverläufen gezielt spezifische Signalanteile gesucht werden, die bei Einspeisung in das Maschinenlernmodul CNN den Reproduktionsfehler D zumindest im Mittel verkleinern. Derart gefundene Signalanteile können dann aus den erfassten Signalstärkeverläufen extrahiert und zum Training des Maschinenlernmoduls CNN als Eingabesignale verwendet werden. Alternativ oder zusätzlich können Signalanteile gesucht werden, die einen negativen Einfluss auf den Reproduktionsfehler D haben. Derartige Signalanteile können dann aus den betreffenden Signalstärkeverläufen entfernt werden, bevor diese zum Training des Maschinenlernmoduls CNN verwendet werden.

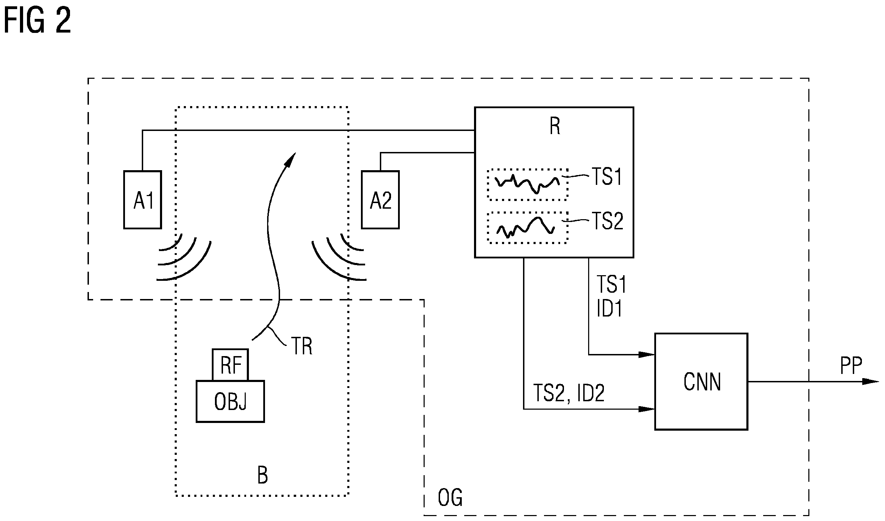

Figur 2 veranschaulicht in schematischer Darstellung einen bestimmungsgemäßen Betrieb des Ortungsgeräts OG, das durch das oben beschriebene Training des Maschinenlernmoduls CNN konfiguriert wurde. Außer auf dem zum Training verwendeten Ortungsgerät OG kann das trainierte Maschinenlernmodul CNN auch von anderen gleichartigen oder ähnlichen Ortungsgeräten wie nachfolgend beschrieben verwendet werden.

Im bestimmungsgemäßen Betrieb soll das konfigurierte Ortungsgerät OG durch den Bereich B bewegte Objekte OBJ, die jeweils mit einem zweiten Funketikett RF versehen sind, anhand von empfangenen Funksignalen lokalisieren.

Zu diesem Zweck werden durch das Lesegerät R über die Antennen A1 und A2 Funkwellen in den Bereich B ausgestrahlt, die von einem jeweils darin befindlichen, an einem Objekt OBJ angebrachten zweiten Funketikett RF empfangen werden und dieses temporär mit Energie versorgen. Das jeweilige zweite Funketikett RF strahlt infolgedessen während seiner Bewegung durch den Bereich B ein Funksignal ab, das von den Antennen A1 und A2 empfangen und an das Lesegerät R weitergeleitet wird. Wie oben beschrieben, erfasst das Lesegerät R einen jeweiligen antennenspezifischen Signalstärkeverlauf TS1 bzw. TS2 des Funksignals und speist diesen zusammen mit der zugehörigen Antennenkennung ID1 bzw. ID2 in das trainierte Maschinenlernmodul CNN als Eingabesignal ein. Gegebenenfalls können die Signalstärkeverläufe vorher auf ein vorgegebenes Zeitraster interpoliert werden. Darüber hinaus können - wie oben angedeutet - Signalanteile mit positivem Einfluss auf eine Prognosegüte bevorzugt in das trainierte Maschinenlernmodul CNN eingespeist werden. Komplementär dazu können Signalanteile mit negativem Einfluss auf die Prognosegüte aus den betreffenden Signalstärkeverläufen vor ihrer Einspeisung entfernt werden.

Anhand der eingespeisten, antennenspezifischen Signalstärkeverläufe TS1 und TS2 prognostiziert das trainierte Maschinenlernmodul CNN dann eine aktuelle Position PP des jeweils etikettierten Objekts OBJ bzw. Funketiketts RF sowie gegebenenfalls weitere Daten über die Bewegung des Objekts OBJ. Die prognostizierte aktuelle Position PP und gegebenenfalls die weiteren Bewegungsdaten werden schließlich von konfigurierten Ortungsgerät OG bestimmungsgemäß ausgegeben.

## Patentansprüche

1. Verfahren zum Konfigurieren eines Ortungsgeräts (OG) zum Orten von Funketiketten (RF), wobei
a) ein oder mehrere erste Funketiketten (RF) viele Male unter variierten Beförderungsbedingungen durch einen vorgegebenen Bereich (B) befördert werden, wobei jeweils
- eine aktuelle Position (P) eines jeweiligen ersten Funketiketts (RF) mittels eines Lokalisierungssensors (C) erfasst wird, sowie
- ein Funksignal des jeweiligen ersten Funketiketts (RF) empfangen und ein jeweiliger Signalstärkeverlauf (TS1, TS2) des empfangenen Funksignals erfasst wird,
b) ein Maschinenlernmodul (CNN) anhand der erfassten aktuellen Positionen (P) und Signalstärkeverläufe (TS1, TS2) darauf trainiert wird, anhand mindestens eines Signalstärkeverlaufs eine korrespondierende aktuelle Position zu reproduzieren, und
c) das Ortungsgerät (OG) dazu eingerichtet wird, Signalstärkeverläufe (TS1, TS2) empfangener Funksignale von zweiten Funketiketten (RF) in das trainierte Maschinenlernmodul (CNN) einzuspeisen und anhand von dessen resultierenden Ausgabesignalen (PP) eine jeweilige aktuelle Position eines jeweiligen zweiten Funketiketts (RF) zu ermitteln.

2. Verfahren nach Anspruch 1, **dadurch gekennzeichnet, dass** ein an einem Objekt (OBJ) angebrachtes Funketikett (RF) mit dem Objekt (OBJ) durch den Bereich bewegt wird.

3. Verfahren nach einem der vorhergehenden Ansprüche, **dadurch gekennzeichnet,**
**dass** zum Variieren der Beförderungsbedingungen
- eine Bewegungstrajektorie (TR), eine Bewegungsrichtung, eine Bewegungsgeschwindigkeit, ein Bewegungsmuster, eine Orientierung, ein Typ und/oder eine Anzahl des mindestens einen ersten Funketiketts (RF),
- eine Bewegungstrajektorie (TR), eine Bewegungsrichtung, eine Bewegungsgeschwindigkeit, ein Bewegungsmuster, eine Orientierung, ein Typ und/oder eine Anzahl von mindestens einem mit einem ersten Funketikett (RF) versehenen Objekt (OBJ),
- eine Position oder Orientierung eines funksignalbeeinflussenden Gegenstandes,
- eine Ausrichtung einer Antenne (A1, A2) des Ortungsgeräts (OG),
- eine Sendeleistung, Empfindlichkeit oder Einstellung des Ortungsgeräts (OG), und/oder
- eine Hardwarekonfiguration des Ortungsgeräts (OG) variiert wird.

4. Verfahren nach einem der vorhergehenden Ansprüche, **dadurch gekennzeichnet,**
**dass** bei der jeweiligen Beförderung eines oder mehrerer erster Funketiketten (RF) durch den Bereich (B) jeweils
- eine Bewegungstrajektorie (TR), eine Bewegungsrichtung, eine Bewegungsgeschwindigkeit, ein Bewegungsmuster, eine Orientierung, ein Typ und/oder eine Anzahl des mindestens einen ersten Funketiketts (RF) oder
- eine Bewegungstrajektorie (TR), eine Bewegungsrichtung, eine Bewegungsgeschwindigkeit, ein Bewegungsmuster, eine Orientierung, ein Typ und/oder eine Anzahl von mindesten einem mit einem ersten Funketikett (RF) versehenen Objekt (OBJ) als Messergebnis erfasst wird, und
**dass** das Maschinenlernmodul (CNN) darauf trainiert wird, anhand mindestens eines Signalstärkeverlaufs (TS1, TS2) ein korrespondierendes Messergebnis zu reproduzieren.

5. Verfahren nach einem der vorhergehenden Ansprüche, **dadurch gekennzeichnet,**
**dass** ein jeweiliges Funksignal durch mehrere Antennen (A1, A2) empfangen wird,
**dass** für eine jeweilige Antenne (A1, A2) ein antennenspezifischer Signalstärkeverlauf (TS1, TS2) des empfangenen Funksignals erfasst und einer die jeweilige Antenne (A1, A2) identifizierenden Antennenkennung (ID1, ID2) zugeordnet wird, und
**dass** dem Maschinenlernmodul (CNN) ein jeweiliger Signalstärkeverlauf (TS1, TS2) zusammen mit einer jeweils zugeordneten Antennenkennung (ID1, ID2) zugeführt wird.

6. Verfahren nach einem der vorhergehenden Ansprüche, **dadurch gekennzeichnet,**
**dass** dem Maschinenlernmodul (CNN) ein jeweiliger Signalstärkeverlauf (TS1, TS2) zusammen mit einer jeweils empfangenen Funketikettkennung zugeführt wird.

7. Verfahren nach einem der vorhergehenden Ansprüche, **dadurch gekennzeichnet,**
**dass** ein Reproduktionsfehler (D) des Maschinenlernmoduls (CNN) erfasst wird,
**dass** in erfassten Signalstärkeverläufen (TS1, TS2) spezifische Signalanteile gesucht werden, die bei Einspeisung in das Maschinenlernmodul (CNN) den Reproduktionsfehler (D) zumindest im Mittel verringern, und
**dass** derart gefundene Signalanteile aus erfassten Signalstärkeverläufen (TS1, TS2) gezielt extrahiert werden und zum Training und/oder zum Verwenden des Maschinenlernmoduls (CNN) in das Maschinenlernmodul (CNN) eingespeist werden.

8. Verfahren nach einem der vorhergehenden Ansprüche, **dadurch gekennzeichnet,**
**dass** das trainierte Maschinenlernmodul (CNN) an einem Einsatzort des Ortungsgeräts (OG) anhand von am Einsatzort erfassten Positionsdaten nachtrainiert wird.

9. Verfahren nach einem der vorhergehenden Ansprüche, **dadurch gekennzeichnet,**
**dass** ein jeweiliger Signalstärkeverlauf (TS1, TS2) von empfangenen Funksignalen auf ein vorgegebenes Zeitraster interpoliert wird, und
**dass** der jeweils interpolierte Signalstärkeverlauf in das Maschinenlernmodul (CNN) eingespeist wird.

10. Verfahren nach einem der vorhergehenden Ansprüche,
**dadurch gekennzeichnet,**
**dass** als Lokalisierungssensor (C) ein optischer Sensor, eine Kamera, ein funkwellenbasierter Sensor, ein Annäherungssensor und/oder ein Laserscanner verwendet wird.

11. Verfahren nach einem der vorhergehenden Ansprüche,
**dadurch gekennzeichnet,**
**dass** das Maschinenlernmodul (CNN) ein rekurrentes neuronales Netz, ein LSTM-Netz, ein faltendes neuronales Netz und/oder ein zeitlich faltendes neuronales Netz umfasst.

12. Verfahren zum Orten von Funketiketten (RF), wobei
ein Ortungsgerät (OG) gemäß einem der vorhergehenden Ansprüche eingerichtet wird, und
eine aktuelle Position (PP) eines zweiten Funketiketts (RF) mittels des konfigurierten Ortungsgeräts (OG) ermittelt wird.

13. Verfahren nach Anspruch 12, **dadurch gekennzeichnet,**
**dass** mehrere Signalstärkeverläufe (TS1, TS2) in das Maschinenlernmodul (CNN) eingespeist werden und jeweils eine Einzelprognose über eine Position des zweiten Funketiketts (RF) ausgegeben wird, und
**dass** die aktuelle Position durch eine Kombination der Einzelprognosen ermittelt wird.

14. Anordnung zum Konfigurieren eines Ortungsgeräts (OG) zum Orten von Funketiketten (RF), eingerichtet zum Ausführen der Verfahrensschritte eines Verfahrens nach einem der Ansprüche 1 bis 11.

15. Ortungsgerät (OG) zum Orten von Funketiketten (RF), eingerichtet durch Ausführung eines Verfahrens nach einem der Ansprüche 1 bis 11.
